# EUROPEAN PATENT APPLICATION

(11) **EP 3 819 674 A1**
(43) Date of publication of application: **12.05.2021**
(21) Application number: 19306451.6
(22) Date of filing: 08.11.2019
(51) Int. Cl.: G01S 19/45, G01S 17/89

(54) **ROLLING ENVIRONMENT SENSING AND GPS OPTIMIZATION**

(71) Applicant: Outsight, 75005 Paris (FR)
(72) Inventor: BRAVO ORELLANA, Raul, 75005 Paris (FR)
(74) Representative: Plasseraud IP

(57) **Abstract**

A mobile entity (3, 31, 32) comprising an imaging unit (1) configured to generate at least a plurality of successive point cloud frames, and construct therefrom, via a simultaneous localization and mapping process, a floating map of a scene travelled by the mobile entity and a floating trajectory of the mobile entity, a geolocation system receiver (2), configured to deliver a plurality of successive geolocations, a computing unit configured to determine, via a best match process between the floating trajectory and the plurality of successive geolocations, an anchored trajectory, wherein the computing unit is configured to correct at least the latest geolocation into a corrected latest geolocation obtained from a projection of the latest geolocation on the anchored trajectory.

## Description

### FIELD OF THE DISCLOSURE

The present disclosure concerns environment sensing systems and geolocations systems that are useful for certain types of mobile entities like aircrafts, drones, road vehicles, without excluding boats.

### BACKGROUND OF THE DISCLOSURE

Geolocations systems, such as GPS, Galileo, Glonass or the like, have become widely used and very popular particularly among vehicle users. These geolocations systems are referenced to the earth and their intrinsic precision is not better than about 10 meters, given various deviation and jitter, notably due to local weather conditions, quantization and discretization processes.

Further, there are some recent developments concerning systems and methods for dynamically generating and updating a tridimensional map of an environment surrounding a mobile entity. Also called rolling environmental sensing, these systems also output a relative (or floating) localization of the environment. These systems and methods are known in the art as Simultaneous Localization And Mapping ('SLAM' in short).

Although some have improved the accuracy of geolocations systems by adding one or more stationary bases and communications features, there remains a need to improve the accuracy of geolocations systems without relying on stationary bases, without the extra cost and burden of arranging stationary bases, or extra communication features.

### SUMMARY OF THE DISCLOSURE

According to one aspect of the present disclosure, it is disclosed mobile entity (e.g. road vehicle, aircraft, drone) comprising:
- at least an imaging unit (1) configured to generate at least a plurality of successive point cloud frames (F(j)), and construct therefrom, via a simultaneous localization and mapping process (e.g. SLAM process), a floating map (FM) of a scene travelled by the mobile entity and a floating trajectory (FT) of the mobile entity,
- a geolocation system receiver (2), configured to deliver a plurality of successive geolocations (GPS(i)),
- a computing unit (6) configured to determine, via a best match process between the floating trajectory and the plurality of successive geolocations (GPS(i)), an anchored trajectory (AT), wherein the computing unit (6) is configured to correct at least the latest geolocation (GPS(k)) into a corrected latest geolocation (GPScorr(k)) obtained from a projection of the latest geolocation (GPS(k)) on the anchored trajectory.

The term *"simultaneous localization and mapping process"* should be understood as a method for dynamically generating and updating a tridimensional map of an environment surrounding the mobile entity, with iterative registration of new point cloud frames (F(j)), as this will be set forth in details later.

The term *"floating map"* is to be understood as a "rolling map of the scene", it means here map which is built incrementally along the travel of the imaging unit when it moves together with the mobile entity. In this sense, "rolling map" may otherwise be called 'floating map' or 'incremental map', the overall footprint of the map moves along generally with the mobile entity.

We note that the *"scene"* of interest can be also moving along with the mobile entity of interest. Areas of interest are situated ahead and aside the mobile entity of interest, without excluding backside.

The term *"imaging unit"* refers to generally to an imager or scanner such as a Lidar system or to a 3D camera/video system.

The term *"plurality of successive geolocations"* refers to a series geolocations, i.e. a series of lastly acquired geolocations.

Thanks to the above arrangement, two sources of data are used in synergy, e.g. the floating map of the scene obtained from the imaging unit and the geolocations series. The inevitable jitter of the geolocation system data is reduced by the synergetic combination with the floating trajectory deduced from the poses of the floating map.

In practice, thanks to the above arrangement, the corrected latest geolocation (GPScorr(k)) thus obtained exhibits an enhanced accuracy, similar to the accuracy obtained for a stationary point when receiving and averaging a series of geolocations. For a stationary point, the jitter can be nearly eliminated by averaging over time the acquired geolocations. A similar averaging process takes place here but for a non-stationary, moving entity. This result is obtained without relying on stationary bases.

In various embodiments, one may possibly have recourse in addition to one and/or other of the following arrangements, taken alone or in combination.

According to one aspect, the imaging unit (1) and the geolocation system receiver (2) operate independently and asynchronously from one another. In other words, in practice, they share no common clock. No real time synchronization is required between the imaging unit and the geolocation system receiver, which makes the system simple. Only a general clock at the computing unit is necessary.

According to one aspect, the floating trajectory (FT) of the mobile entity comprises the successive poses (SLP(j)) of the of the imaging unit, each corresponding to a point cloud frame (F(j)). The term "pose" here is to be understood as the position of the focal point of the imaging unit, or a base reference optical/sensing point of the imaging unit.

This is a simple solution, since the pose is naturally the point of view of the imaging unit and the registration of point cloud frame is carried out with a spatial reference taken at the pose. It does not preclude a further calculation for shifting the floating trajectory (FT) with the poses (SLP(j)) to a trajectory of a reference point of the mobile entity (e.g. vehicle floating trajectory (VFT)).

According to one aspect, the plurality of successive geolocations (GPS(i)) are timestamped, the plurality of the poses (SLP(j)) of the imaging unit are timestamped and the best match process takes into account timestamps. Thereby the geolocations and the poses (SLP(j)) can be put in timed correspondence in the best match process. Also even with strong jitter, the geolocations are ordered along the time chronology. Further, even though some data collection are not purely periodic, the timestamp gives a useful information allowing to properly place the data of interest in the chronology timeline.

According to one aspect, the computing unit is further configured to determine a latest known position (P(t)) of a reference point (Pref) of the mobile entity, computed from the corrected latest geolocation (GPScorr(k)). Therefore, if there exists a spatial difference, for example a spatial offset between the point of view of the imaging unit (i.e. the pose) and a reference point (Pref) of the mobile entity, a shift calculation enables to compute the latest known position (P(t)) of said reference point. Such reference point can be a center of gravity of the mobile entity or a center or gyration of the mobile entity. This is helpful to optimize vehicle control.

According to one aspect, the computing unit is further configured to determine a heading vector (HD) of the mobile entity, computed from a line drawn between the two more recent poses. Thereby, not only an accurate position, but also a heading is determined. When drawing a line between the last but one point and the last point, a direction tangent of the last part of the known trajectory is determined. Most of the time, whatever reference is taken (pose of the imaging unit or reference point of the mobile entity) the same heading is obtained. The accurate knowledge of the heading vector facilitates a precise and relevant control of the mobile entity (notably steering).

According to one aspect, the computing unit is further configured to perform at least the best match process recursively, and the best match process takes as an initial point the latest known corrected latest geolocation (GPScorr(k)). Said otherwise, the best match process is performed iteratively (looped process) together with the acquisition of the geolocations and the update of the floating map. This enables to further improve the accuracy of the corrected geolocations.

According to one aspect, the mobile entity is formed as an aircraft or a drone. Control in 3 dimensions is necessary and accurate knowledge of spatial coordinates help to control the mobile entity. Take-off and landing, approaches, can be improved via the enhanced GPS system.

According to one aspect, the mobile entity is formed as road vehicle. Control in 2 dimensions is done and guidance in a 3D is enabled for example in the case of superposed lanes, diverging lanes in complex crossroads.

According to another aspect, the present disclosure is also directed at a method carried out in a mobile entity comprising at least an imaging unit (1), a geolocation system receiver (2) and a computing unit (6), the method comprising:
- generating, by the imaging unit, at least a plurality of successive point cloud frames (F(j)), and construct therefrom ,via a simultaneous localization and mapping process (SLAM), a floating map (FM) of a scene travelled by the vehicle and a floating trajectory (FT) of the mobile entity,
- providing a plurality of successive geolocations (GPS(i)) from the geolocation system receiver (2),
- determining, via a best match process between the floating trajectory (FT) and the plurality of successive geolocations (GPS(i)), an anchored trajectory (AT),
- correcting at least the latest geolocation (GPS(k)) into a corrected latest geolocation (GPScorr(k)) obtained from a projection of the latest geolocation (GPS(k)) on the anchored trajectory.

We obtain same benefits as per the device claim relating to the mobile entity above.

According to one aspect, the floating trajectory (FT) of the mobile comprises successive poses (SLP(j)) of the of the imaging unit, the plurality of successive geolocations (GPS(i)) are timestamped, the plurality of the poses (SLP(j)) of the imaging unit are timestamped and the best match process takes into account timestamps. Thereby the geolocations and the poses (SLP(j)) can be put in timed correspondence in the best match process. Also even with strong jitter, the geolocations are ordered along the time chronology.

According to one aspect, the method further comprises :
- determining a heading vector of the mobile entity, computed from a line drawn between the two more recent poses.

According to one aspect, the method further comprises :
- determining a latest known position (P(t)) of a reference point (Pref) of the mobile entity, computed from the corrected latest geolocation (GPScorr(k)).

According to one aspect, the best match process is a closest point iterative algorithm or a least squares sum minimization calculation. This kind of calculation can be performed with a commercial cost-effective processor and the promoted method can be implemented in various hardware configurations.

According to one aspect, the imaging unit (1) and the geolocation system receiver (2) operate independently and asynchronously from one another.

### BRIEF DESCRIPTION OF THE DRAWINGS

Other features and advantages of the invention appear from the following detailed description of two of its embodiments, given by way of non-limiting example, and with reference to the accompanying drawings, in which:
- Figure 1 illustrates a diagrammatical top view of one or more vehicle(s) circulating on a road, with an imaging unit acquiring iteratively point cloud frames and construct therefrom a floating map and a trajectory via a simultaneous localization and mapping process,
- Figure 2 illustrates a diagrammatical top view of a plurality of geolocations (GPS(i)) iteratively received from the geolocation system receiver,
- Figure 3 illustrates a process of finding a correspondence between a plurality of geolocations (GPS(i)) and the floating trajectory inferred from the imaging unit,
- Figure 4 is similar to Figure 3 and shows the result of the best match process,
- Figure 5 is similar to Figure 4 and shows a result of an iterative best match process, with an initial point taken from a previously corrected geolocation,
- Figure 6 illustrates a diagrammatical elevation view of a vehicle of interest circulating on a road,
- Figure 7 shows a diagrammatical block diagram of the system promoted in the present disclosure,
- Figure 8 illustrates an example of a method carried out according to the present disclosure.

### DETAILED DESCRIPTION OF THE DISCLOSURE

In the figures, the same references denote identical or similar elements. For sake of clarity, various elements may not be represented at scale.

### Overview & imaging unit

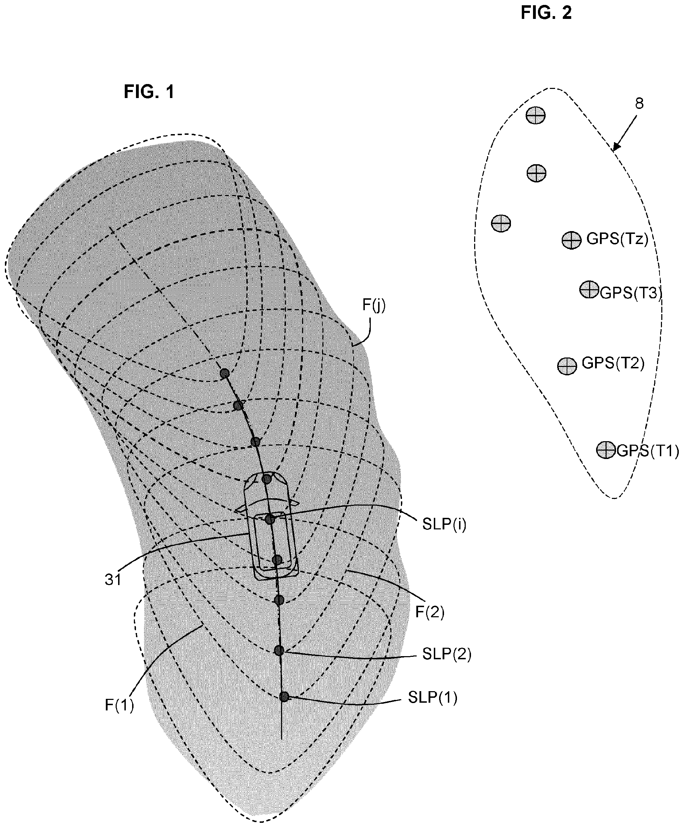

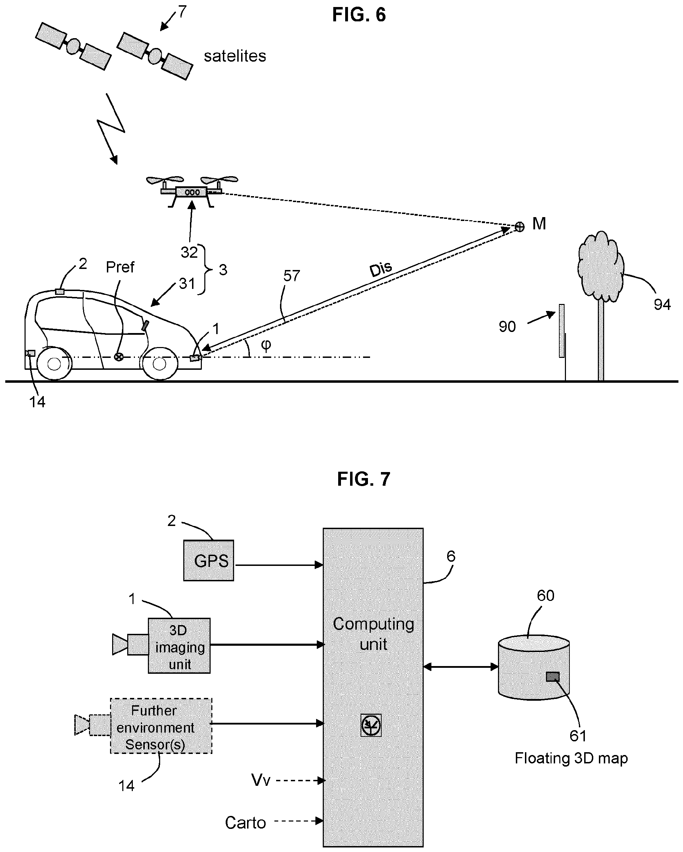

Figure 1 shows diagrammatically a top view of a vehicle 31 which is one example of the mobile entity 3 considered in the present disclosure. The mobile entity 3 is equipped with an imaging unit **1**, a geolocation receiver **2** and a computing unit **6** (cf Fig 7).

Although a road vehicle has been represented at figure 1, any type of mobile entity **3** like aircrafts, drones, road vehicles, without excluding boats, are encompassed within the scope of the present disclosure. With reference to figure 6, there are shown two types of mobile entity **3** : a drone **32** and a road vehicle **31**.

The imaging unit **1** can be an imager such as a Lidar system or to a 3D camera/video system.

The imaging unit **1** is used to compute a relative (or floating) localization of the environment, along with the travel of the mobile entity. These systems and methods are known in the art as Simultaneous Localization And Mapping ('SLAM' in short).

Basically, the imaging unit is configured to generate at least a plurality of successive point cloud frames F(j), and construct therefrom, via the above-mentioned simultaneous localization and mapping process (e.g. SLAM process), a floating map **FM** of a scene travelled by the mobile entity.

From the floating map, and the successive poses **SLP**(j) of the of the imaging unit, a floating trajectory **FT** of the mobile entity can be determined as will be explained in detail below.

A tridimensional scanner (or imager) acquires sets of data points, called point clouds **F(j)**, that are representative of the objects located in a local volume of the environment surrounding said scanner/imager, also called a 'scene'. One example of a commonly used imaging unit is a laser rangefinder such as a light detection and ranging (LIDAR) module which periodically scans its environment using a rotating laser beam. The term "lidar-type scanner" may be construed as a scanner using bursts of electromagnetic waves and echoes on objects therefrom, said electromagnetic waves being generally in the near infra-red domain, for example having a wavelength comprised between 600 nanometer and 2000 nanometer, more preferably in the range 1400-1600 nm. Also alternatively, some special Lidars are able to acquire their environment from a common simultaneous illumination, they are known as "flash lidars".

The imager unit **1** computes a range, corresponding to a distance **Dis** from the imager **1** to a point **M** of reflection of the initial signal on a surface of an object located in the scene. Said range is computed by comparing the timings features of respective transmitted signal and reflected signal, for instance by comparing the time or the phases of emission and reception.

The imager unit **1** exhibits an available field of view denoted **FOV.**

In one example, the imager unit **1** comprises a laser emitting light pulses with a constant time rate, said light pulses being deflected by a two moving mirrors rotating **θ**, **ϕ** along two respective directions.

The scanning processes performed in real-time, i.e., controllable mirrors are rotated in the space (**θ**, **ϕ**) simultaneously with the firing of burst of electromagnetic waves (**Tx**) θ, ϕ, along the firing line **57**, to scan the field a view, **FOV** = from θmin, cpmin to θmax, ϕmax.

Firing period is denoted **Tb**. Tb is as small as a few nanoseconds, or even less.

As soon as all the field of view **FOV** has been scanned, the first scanner unit issues a point cloud frame which can be represented by a matrix/tensor Mx(t_{z}), namely an array of points with (**θ**, **ϕ**, **Dis**). t_{z} is considered as a sampling time, which can be stored as the timestamp for the frame F(j). Scanning or sweeping all the field of view takes a short time, let's say less than 100ms, preferably less than 50ms, possibly even less.

As stated above, the imager unit acquires (collects) point cloud frames F(j) of the scene, each point cloud frame comprising an array of points, each point having as attribute angles and distance (**θ**, **ϕ**, **Dis**) with regard to the imager unit point of view **SLP**. In addition, the imager unit transmits each point cloud frame F(j) to the computing unit **6** as soon as they are available, such that the second point cloud frame can be registered into the floating 3D map **61.**

Each point cloud frame **F(j)** has a pose which is here the position of the focal point of the imaging unit, or a base reference optical/sensing point of the imaging unit.

The floating trajectory **FT** of the mobile entity is constructed from the successive **poses** SLP(j) of the of the imaging unit.

Registration process involves a geometrical transformation function TR cause a point cloud frame of interest to match into the floating map of the scene, i.e. find the best possible match into the floating 3D map of the scene.

In practice, there may be a substantial overlap between a newly received frame and the floating 3D map, and this is enough to allow reliable registration and then incrementing the content of the floating 3D map.

The registration process causes the point cloud frame of interest (the latest received) to find the best possible match into the floating 3D map 61 of the scene, which implies mathematical transformation(s) to shift, orientate, spread-in spread-out the array of points of the point cloud frame of interest.

Find the best possible match into the floating 3D map can be done by scanning transformation noted TRi, and searching from the best match with an interactive closest points process [TRi] x [F(j)] to be compared to portions of [RMAP(tk)] (full floating 3D map).

Once the best match TRi=TR_{best} is found, the relevant data [TR_{best}] x [F (i)] imported into the floating 3D map 61, which is summarised by the symbolic formula:
[RMAP(tk)] <= [TR] x [F(j)]. TR is a tensor-to-tensor transform or a tensor-to-matrix transform.

One example of general registration technique can be found in document EP3078935.

Any type of ICP registration technique or the like can also be used.

Each time a new frame F(j) is imported into the general floating map, the corresponding position of the reference point, or pose SLP, is stored in memory.

Therefore the floating map is associated with a series of poses, denoted **SLP(j).**

The series of poses **SLP(j)** defines a trajectory, which is here a floating trajectory denoted FT ; this trajectory is defined in the geometrical reference of the map 61 but without any absolute reference to the earth or absolute reference.

The registration and the determination and storage of poses can be performed either locally at the imaging unit **1** or can be performed at the computing unit **6.**

Also, additionally or alternatively, one can use one or more video camera(s), either with a plurality of 2D camera and/or one or more TOF 3D camera (TOF means "time of flight").

The successively acquired point clouds **F(j)** can be used to generate 3D maps of the environment seen by the mobile entities during a travel for mapping purposes, for example for identifying fixed objects like a tree **94** or a road signal **90,** or moving objects.

Optionally, each point cloud **F(j)** can be timestamped, the timestamp corresponding to the moment in time when the point cloud is acquired.

### Geolocations system

Besides the imaging unit, the mobile entity **3** comprises a geolocation system receiver 2, configured to receive signals from satellites **7** and to deliver therefrom a plurality of successive geolocations **GPS(i),** the index **i** denotes the rank in the series of successive geolocations denoted **8.** There may be provided a rolling window **8** of particular interest; in this rolling window, only the latest **N** geolocations are considered; for some purposes the older ones may be forgotten.

As illustrated in figure 2, GPS(T1), GPS(T2), GPS(T3), GPS(Tz) represent, in a map, coordinates of the successive geolocations delivered **GPS(i)** by the geolocation system receiver **2**.

Geolocations systems of this type are known per se, such as GPS, Galileo, Glonass or the like, and therefore not described in detail herein.

As known per se, there are inaccuracies which reflect on the illustrated map, an imaginary line passing through all the successive location is far from being a line whereas the real trajectory of the vehicle is not far from a line.

Stated otherwise, the geolocations delivered by the system exhibit a jitter of at least 2 m, in practice around 5 m with good weather, and up to more than 10 m with bad weather. Not only the weather but also electromagnetic interference can affect the stability of GPS signals and therefore increase the inaccuracies of the geolocations.

The coordinates of the successive geolocations may include only two numbers, i.e. latitude and longitude. However optionally, a third number can be exploited, namely the altitude.

The plurality of successive geolocations refers to a series geolocations, i.e. a series of lastly acquired geolocations. Optionally, each successive geolocations **GPS(i)** can be timestamped, the timestamp corresponding to the moment in time when the geolocation is acquired.

The imaging unit **1** and the geolocation system receiver **2** operate independently and asynchronously from one another. In practice, they share no common clock.

### Synergetic comparison and combination

The computing unit **6** is configured to determine, via a best match process between a floating trajectory FT and the plurality of successive geolocations GPS(i), an anchored trajectory AT.

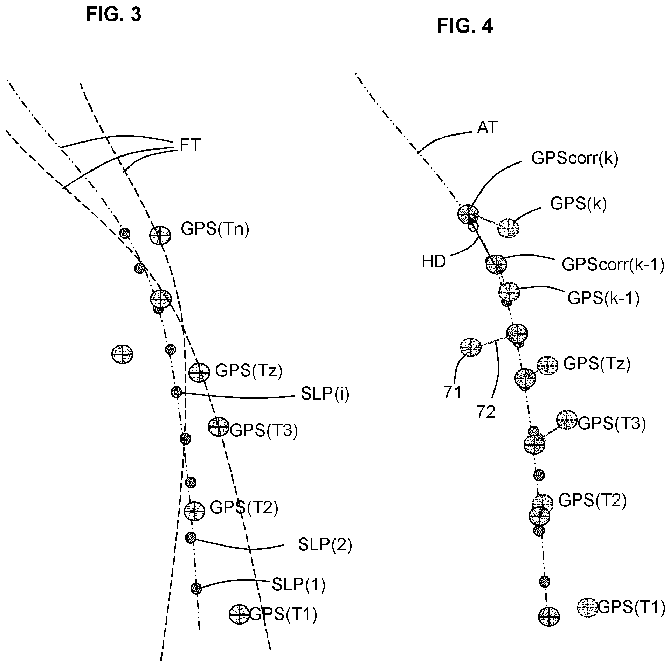

More precisely, turning to figure 3, the computing unit 6 has available on the one hand a floating trajectory FT which has no absolute reference position, and on the other hand a series of successive geolocations GPS(i). The computing unit performs a recursive calculation to find a position of the floating trajectory with regard to series of geolocation which gives a minimal distance (for example with least squares sum or any other distance calculation algorithm), this is also referred to as the best match process. On figure 3, there are shown three candidate relative positions of the floating trajectory **FT** among the series of geolocation. After calculation which is illustrated at figure 4, the best match position becomes the elected anchored trajectory **AT**.

The best match process can take into account the orientation of the series of geolocations, and the presumed orientation of the trajectory FT. We note here that the best match process can take into account the chronologic order of items SLP(j) and GPS(i).

Also the best match process can take into generally the time with reference to the general clock.

Further, the best match process can also take into precise timestamps collected when acquiring the point clouds and the geolocations. In this case, the physical distance from a acquired pose to an acquired geolocation is calculated consistently with their own timestamps.

Once the an anchored trajectory **AT** is determined, the computing unit 6 is configured to correct at least the latest geolocation GPS(k) into a corrected latest geolocation GPScorr(k). For instance, the corrected latest geolocation GPScorr(k) is obtained from a projection of the latest geolocation (GPS(k)) on the anchored trajectory AT. Either a perpendicular projection, or a projection having as primary criterion the timestamps can be carried out.

A corrected, last but one, geolocation GPScorr(k-1) is obtained from a projection of the last but one geolocation GPS(k-1) on the anchored trajectory.

As illustrated at figure 4, all the GPS geolocation points GPS(i) can be then projected onto the anchored trajectory. AT

Advantageously, the corrected latest geolocation (GPScorr(k)) thus obtained exhibits an enhanced accuracy, similar to the accuracy obtained for a stationary point when receiving and averaging a series of geolocations. For a stationary point, the jitter can be nearly eliminated by averaging over time the acquired geolocations. A similar averaging process takes place here but for a non-stationary, moving entity. This result is obtained without relying on stationary bases.

The computing unit is further configured to determine a latest known position **P(t)** of a reference point **Pref** of the mobile entity, computed from the corrected latest geolocation **GPScorr**(k).

It should be understood that the process exposed above is carried out iteratively.

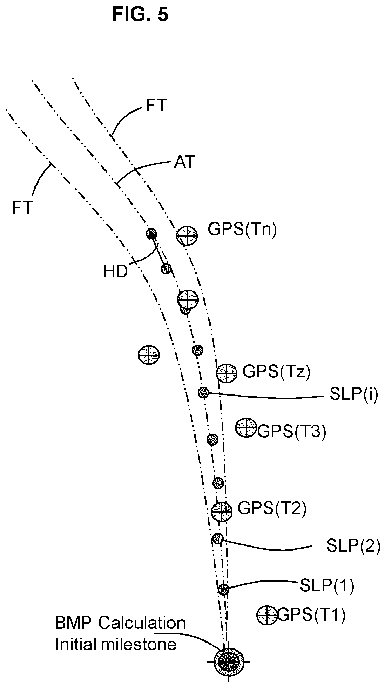

As illustrated at figure 5, the best match process to anchor floating trajectory can take advantage of lastly accurate position, illustrated by "BMP calculation initial milestone" at figure 5. Therefore the best match process has a limited scope of search, just orientating the floating trajectory FT with regard to this initial milestone and finding the appropriate best orientation with regard to the series of geolocations. This makes the calculation shorter, the resources required at the computing unit smaller.

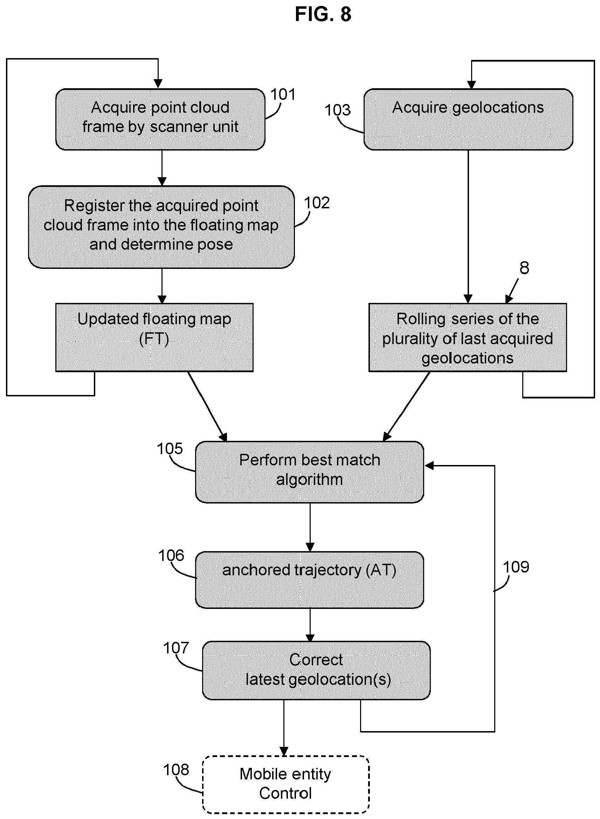

With reference to figure 8, ref **101** designates the functional block "Acquire point cloud frame by scanner unit", ref **102** designates the functional block "Register the acquired point cloud frame into the floating map and determine pose" which gives as a result of an updated floating map FT, the process is looped. Recurrence is of at least 4Hz for point cloud frames and SLAM registration, preferably greater than 5 Hz.

Ref **103** designates the functional block "Acquire geolocations" which gives as a result of a Rolling series of the plurality of last acquired geolocations 8. The process is looped, recurrence is at least 4Hz for point geolocations acquisition

Ref **105** designates the functional block "Perform best match algorithm" which gives as a result an anchored trajectory **AT,106.**

Ref **106** designates the functional block "Correct latest geolocation(s)" which gives as a result GPScorr(k). Ref **108** designates the mobile entity control block, in which any control system benefits from the accurate geolocations.

Ref **109** denotes the iteration of the process of finding the best match to anchor a floating trajectory into an anchored trajectory **AT** in order to improve the accuracy.

### Miscellaneous

The system may further comprise one or more further environment sensors denoted collectively by **14** at figure 7, to supplement imaging unit and the geolocation receiver. Vehicle speed can be another input. Trajectory control system like ESP can also provide supplemental information regarding possible yaw movement of the vehicle, sliding of the like.

Regarding the plurality of geolocations, the window depth for GPS, denoted **N,** is at least 10, preferably comprised between 20 and 50.

Not only the last and last but one geolocation can be corrected once the anchored trajectory **AT** is determined as shown at figure 4.

We note that possible aberrant point like the one illustrated at ref **71** at Figure 4 can have few or no effect on the overall calculation, a strong correction **72** brings the point back onto the anchored trajectory **AT.**

The computing unit **6** is further configured to determine a heading vector **HD** of the mobile entity, computed from a line drawn between the two more recent poses.

The heading vector HD of the mobile entity can be otherwise computed from a line drawn between the two more recent corrected geolocations [GPScorr(k-1) to GPScorr(k)]

The heading vector is at first hand a floating heading vector. After the anchoring of the trajectory, the floating heading vector becomes an absolute heading vector.

There is provided a data storage space **60** where the computing unit is able to store the floating 3D map **61** of the scene. The data storage space can be integrated in the computing unit **6** or distinct from the computing unit.

Even though the trajectories FT,AT are defined from the poses of the imaging unit, for most situations a simple geometrical shift allows to determine the trajectory of any point of the vehicle, and in particular, port of interest of the vehicle like center front end, center of gravity, XYZ null vehicle coordinate, or any reference point **Pref,** that may have an interest for control.

## Claims

1. A mobile entity (3) comprising:
- at least an imaging unit (1) configured to generate at least a plurality of successive point cloud frames (F(j)), and construct therefrom, via a simultaneous localization and mapping process, a floating map (FM) of a scene travelled by the mobile entity and a floating trajectory (FT) of the mobile entity,
- a geolocation system receiver (2), configured to deliver a plurality of successive geolocations (GPS(i)),
- a computing unit (6) configured to determine, via a best match process between the floating trajectory and the plurality of successive geolocations (GPS(i)), an anchored trajectory (AT), wherein the computing unit (6) is configured to correct at least the latest geolocation (GPS(k)) into a corrected latest geolocation (GPScorr(k)) obtained from a projection of the latest geolocation (GPS(k)) on the anchored trajectory.

2. The mobile entity according to claim 1, wherein the imaging unit (1) and the geolocation system receiver (2) operate independently and asynchronously from one another.

3. The mobile entity according to any of the claim 1 to 2, wherein the plurality of successive geolocations (GPS(i)) are timestamped, the plurality of the poses (SLP(j)) of the imaging unit are timestamped and the best match process takes into account timestamps.

4. The mobile entity according to claim 3, wherein the plurality of successive geolocations (GPS(i)) are timestamped, the plurality of the poses (SLP(j)) of the imaging unit are timestamped and the best match process takes into account timestamps.

5. The mobile entity according to any of the claim 1 to 4, wherein the computing unit is further configured to determine a latest known position (P(t)) of a reference point (Pref) of the mobile entity, computed from the corrected latest geolocation (GPScorr(k)).

6. The mobile entity according to any of the claim 1 to 5, wherein the computing unit is further configured to determine a heading vector (HD) of the mobile entity, computed from a line drawn between the two more recent poses.

7. The mobile entity according to any of the claim 1 to 6, wherein the computing unit is further configured to perform at least the best match process recursively, and the best match process takes as an initial point the latest known corrected latest geolocation (GPScorr(k)).

8. The mobile entity according to any of the claim 1 to 7, formed as an aircraft or drone.

9. The mobile entity according to any of the claim 1 to 7, formed as a road vehicle.

10. A method carried out in a mobile entity comprising at least an imaging unit (1), a geolocation system receiver (2) and a computing unit (6), the method comprising:
- generating, by the imaging unit (1), at least a plurality of successive point cloud frames (F(j)), and construct therefrom, via a simultaneous localization and mapping process, a floating map (FM) of a scene travelled by the vehicle and a floating trajectory (FT) of the mobile entity,
- providing a plurality of successive geolocations (GPS(i)) from the geolocation system receiver (2),
- determining, via a best match process between the floating trajectory (FT) and the plurality of successive geolocations (GPS(i)), an anchored trajectory (AT),
- correcting at least the latest geolocation (GPS(k)) into a corrected latest geolocation (GPScorr(k)) obtained from a projection of the latest geolocation (GPS(k)) on the anchored trajectory.

11. The method according to claim 10, wherein the floating trajectory (FT) of the mobile comprises successive poses (SLP(j)) of the of the imaging unit, wherein the plurality of successive geolocations (GPS(i)) are timestamped, the plurality of the poses (SLP(j)) of the imaging unit are timestamped and the best match process takes into account timestamps.

12. The method according to any of the claims 10 to 11, further comprising :
- determining a heading vector of the mobile entity, computed from a line drawn between the two more recent poses.

13. The method according to any of the claims 10 to 12, further comprising:
- determining a latest known position (P(t)) of a reference point (Pref) of the mobile entity, computed from the corrected latest geolocation (GPScorr(k)).

14. The method according to any of the claims 10 to 13, wherein the best match process is a closest point iterative algorithm or a least squares sum minimization calculation.

15. The method according to any of the claims 10 to 14, wherein the imaging unit (1) and the geolocation system receiver (2) operate independently and asynchronously from one another.
